# EUROPÄISCHE PATENTANMELDUNG

(11) **EP 3 308 897 A1**
(43) Veröffentlichungstag der Anmeldung: **18.04.2018**
(21) Anmeldenummer: 16193905.3
(22) Anmeldetag: 14.10.2016
(51) Int. Cl.: B23K 26/26, B29C 65/16, B23K 26/324, B29C 65/00, F21S 8/10, B23K 26/244, B23K 101/00, B23K 101/04, B23K 101/36, B23K 103/00

(54) **VERFAHREN ZUM LASERDURCHSTRAHLSCHWEISSEN ZWEIER FÜGEPARTNER UND ZU DESSEN DURCHFÜHRUNG GEEIGNET AUSGESTALTETES FÜGETEIL ALS EINER VON ZWEI FÜGEPARTNERN**

(71) Anmelder: odelo GmbH, 70329 Stuttgart (DE)
(72) Erfinder: Dr. HORNUNG, Thorsten, 73760 Ostfildern (DE); BIEKERT, Oliver, 73098 Rechberghausen (DE)
(74) Vertreter: Benninger, Johannes

(57) **Zusammenfassung**

Es wird ein Verfahren zum Laserdurchstrahlschweißen zweier Fügepartner (01, 05), einem für der Wellenlänge eines zum Schweißen verwendeten Laserlichts (L) transparenten Fügepartner (01) und um einem für dieses Licht intransparenten Fügepartner (05), sowie ein Fügeteil (01) als transparenter Fügepartner beim Laserdurchstrahlschweißen beschrieben. Verfahrensgemäß werden die beiden Fügepartner (01, 05) miteinander verschweißt, indem in einer Kontaktzone zwischen einer Fügefläche (06) des intransparenten Fügepartners (05) und einer dieser gegenüberliegenden Oberfläche (02) des transparenten Fügepartners (01) eine stoffschlüssige Verbindung ausgebildet wird, wobei das ohne Einwirkung des Laserlichts (L) ansonsten feste Material zumindest eines der Fügepartner (01, 05) in der Kontaktzone durch das Licht zumindest kurzzeitig aufgeschmolzen wird und sich mit dem Material des verbleibenden Fügepartners (05, 01) vereint und durch anschließendes Abkühlen aushärtet. Das Laserlicht (L) wird dabei durch den transparenten Fügepartner (01) hindurch auf die Fügefläche (06) des intransparenten Fügepartners (05) gerichtet. Das Laserlicht (L) propagiert innerhalb des transparenten Fügepartners (01) unter einem Neigungswinkel zu einer in einem Absorptionspunkt normal auf der Fügefläche (06) des intransparenten Fügepartners (05) in der Kontaktzone aufstehenden Achse geneigt von dessen Einkopplung in den transparenten Fügepartner (01) bis zu dessen zumindest weitgehenden Absorption durch den intransparenten Fügepartner (05) am Absorptionspunkt. Das Fügeteil (01) umfasst eine als eine von zwei beim Laserdurchstrahlschweißen einander gegenüberliegende Schweißflächen einer Kontaktzone vorgesehene Oberfläche (02) und eine auf einer der Oberfläche (02) gegenüberliegenden, abgewandten Seite des Fügeteils (01) aufstehende Wand (03). Das Fügeteil (01) weist Einkoppel- und/oder Umlenkmittel (04) zur seitlichen Einkopplung des Laserlichts (L) in die Wand (03) und/oder zur Umlenkung des Laserlichts (L) zu der Oberfläche (02) auf.

## Beschreibung

Die Erfindung betrifft ein Verfahren zum Laserdurchstrahlschweißen gemäß dem Oberbegriff des Anspruchs 1 und ein zur Durchführung eines solchen Verfahrens geeignet ausgestaltetes Fügeteil als einer von zwei Fügepartnern zum Laserdurchstrahlschweißen gemäß dem Oberbegriff des Anspruchs 6.

Beim Laserdurchstrahlschweißen werden ein für Licht der Wellenlänge eines zum Schweißen verwendeten Laserstrahls transparenter Fügepartner mit einem ein für dieses Licht intransparenten Fügepartner in einer kurz als Schweißnaht bezeichneten Kontaktzone zwischen einer Fügefläche des intransparenten Fügepartners und einer dieser gegenüberliegenden Oberfläche des transparenten Fügepartners durch Herstellung einer stoffschlüssigen Verbindung verschweißt, indem die Schweißnaht durch den transparenten Fügepartner hindurch mit dem Laser erwärmt und hierdurch das ohne Einwirkung des Lasers ansonsten feste Material zumindest eines der beiden Fügepartner im Bereich der Schweißnaht kurzzeitig aufgeschmolzen wird.

Die Fügefläche des intransparenten Fügepartners und die dieser gegenüberliegende Oberfläche des transparenten Fügepartners bilden dabei miteinander korrespondierende, entlang der gesamten Schweißnaht aneinander anliegende oder nur durch einen kleinen Spalt voneinander beabstandet einander gegenüberliegende Schweißflächen der Schweißnaht.

Vermittels Laserdurchstrahlschweißen lassen sich beispielsweise die heutzutage überwiegend aus Kunststoff hergestellten Bauteile Lichtscheibe (beispielsweise aus PMMA, Polymethylmethacrylat, auch Acrylglas) und Leuchtengehäuse einer Fahrzeugleuchte im Allgemeinen, insbesondere einer Kraftfahrzeugleuchte und einer Kraftfahrzeugheckleuchte im Speziellen, als Fügepartner stoffschlüssig miteinander verbinden.

Beispielhafte Laserschweißverfahren für das Laserdurchstrahlschweißen sind das Konturschweißen, das Simultanschweißen und das Quasi-Simultanschweißen. Beim Konturschweißen fährt der Laserstrahl die Kontur der Schweißnaht ab, wobei die Fügepartner am entlang der Kontur der Schweißnaht fortschreitend wandernden Auftreffpunkt des Laserstrahls nach und nach miteinander verschweißt werden. Das Simultanschweißen lenkt das Laserlicht aus einer oder mehreren Laserstrahlquellen gegebenenfalls über geeignete Lichtleiter und/oder Blenden gleichzeitig auf die gesamte Schweißnaht und verschweißt dadurch die ganze Schweißnaht gleichzeitig. Beim Quasi-Simultanschweißen erfolgt der Schweißprozess an der Schweißnaht ebenfalls zeitgleich, jedoch wird die dazu notwendige Schweißenergie über einen Laserstrahl eingebracht, der die Schweißnaht in schneller Folge wiederholt abfährt.

Allen Laserdurchstrahlschweißverfahren ist gemein, dass das Laserlicht so in den transparenten Fügepartner eingekoppelt werden muss, dass an jede Stelle der Schweißnaht die richtige Leistungsdichte eingebracht wird. Wird zu wenig Energie eingebracht, findet kein Schweißprozess statt, wird zu viel Energie eingebracht, kann das Material der Fügepartner beschädigt werden oder die optische Anmutung der resultierenden Schweißnaht beeinträchtigt werden.

Problematisch sind beispielsweise raue oder gekrümmte Oberflächen des transparenten Fügepartners im Bereich der Lichteinkopplung sowie Stufen oder steile Kanten in der Oberfläche, durch welche die Lichteinkopplung erfolgt. Auch lange optische Weglängen für das Laserlicht im transparenten Fügepartner sind ungünstig, da die Strahlungsleistung durch Streuung und Absorption reduziert wird.

Eine ungünstige Geometrie des transparenten Fügepartners kann den Schweißprozess erheblich erschweren, die Qualität der Schweißnaht verschlechtern, den Ausschuss in der Produktion erhöhen oder den Laserschweißprozess sogar unmöglich machen. Der Laserschweißprozess ist ebenfalls nicht möglich, wenn die der Fügefläche des intransparenten Fügepartners gegenüberliegende Oberfläche des transparenten Fügepartners so durch ein Bauteil verdeckt wird, dass die Lichteinkopplung in Richtung Schweißnaht nicht möglich ist.

Um das Laserschweißen zu vereinfachen, werden nach dem Stand der Technik die Geometrien der Fügepartner insbesondere im Bereich einer Schweißrippe und an der Oberfläche des transparenten Fügepartners, die der Fügefläche des intransparenten Fügepartners gegenüber liegt, auf den Schweißprozess angepasst. Teilweise kann das Laserlicht auch aus einer geneigten Richtung schräg Richtung Schweißnaht eingestrahlt werden, um ungünstige Bereiche der Oberfläche des transparenten Fügepartners zu umgehen.

Ist eine Einstrahlung des Laserlichts durch den transparenten Fügepartner hindurch nicht in einer solchen Art und Weise möglich, dass ausreichend Strahlungsleistung gezielt in die Kontaktzone zwischen der Fügefläche des intransparenten Fügepartners und der dieser gegenüberliegenden Oberfläche des transparenten Fügepartners eingebracht wird, so kann das Laserschweißen nach dem Stand der Technik nicht angewendet werden.

Durch DE 10 2007 028 706 ist eine Laserschweißverbindung zwischen zwei Fügepartnern bekannt, einem Leuchtengehäuse und eine dessen Lichtöffnung verschließende, gewölbte Lichtscheibe. An der dem Leuchtengehäuse zugewandten Rückseite der gekrümmten Lichtscheibe ist in einem umlaufenden Randbereich eine umlaufende, lichtscheibenseitige Schweißfläche vorgesehen. In einem parallel zu einer Bezugslinie verlaufenden Querschnitt durch die Lichtscheibe hindurch gesehen, welcher zwei gegenüberliegende Abschnitte der im umlaufenden Randbereich umlaufenden lichtscheibenseitigen Schweißfläche zeigt:
- weist die dem Leuchtengehäuse abgewandte Vorderseite der gekrümmten Lichtscheibe in gegenüberliegenden Abschnitten des Randbereichs entgegengesetzte Schrägstellungen auf,
- verläuft die Bezugslinie als Winkelhalbierende des zwischen an die dem Leuchtengehäuse abgewandte Vorderseite der gekrümmten Lichtscheibe in gegenüberliegenden, entgegengesetzt schräg stehenden Abschnitten des Randbereichs angelegten Tangenten eingeschlossenen Winkels,
- schließen die gegenüberliegenden Abschnitte der lichtscheibenseitigen Schweißfläche in gegenüberliegenden Abschnitten des Randbereichs gegenüber der Bezugslinie gleiche Winkel ein, und
- weisen die Abschnitte der lichtscheibenseitigen Schweißfläche in den gegenüberliegenden Abschnitten des Randbereichs jeweils eine Schrägstellung in der selben Richtung auf, wie die Tangente an der Vorderseite des jeweiligen Abschnitts des Randbereichs.

Im Bereich der umlaufenden lichtscheibenseitigen Schweißfläche ist eine Verdickung der Lichtscheibe im umlaufenden Randbereich vorgesehen, welche eine von der Rückseite der Lichtscheibe zumindest teilweise abstehende Schweißrippe bildet.

Eine Aufgabe der Erfindung ist die Schaffung eines Verfahrens zum Laserdurchstrahlschweißen und eines zu dessen Ausführung geeigneten transparenten Fügepartners, welche eine Erweiterung der Einsatzmöglichkeit des Laserschweißens auch auf solche, einen für zum Laserschweißen verwendetes Laserlicht im Wesentlichen transparenten Fügepartner und ein das Laserlicht in hohem Maße absorbierenden, für das Laserlicht im Wesentlichen intransparenten Fügepartner umfassende Fügepartnerkombinationen erlauben, bei denen der transparente Fügepartner eine lange Seitenwand zur Schweißnaht hin aufweist.

Die Aufgabe wird jeweils durch die Merkmale eines der unabhängigen Ansprüche gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Ein erster Gegenstand der Erfindung betrifft demnach ein Verfahren zum Laserdurchstrahlschweißen zweier Fügepartner. Bei den beiden Fügepartnern handelt es sich um einen für kurz als Laserlicht bezeichnetes Licht der Wellenlänge eines zum Schweißen verwendeten Laserstrahls transparenten Fügepartner und um einen für dieses Laserlicht intransparenten Fügepartner.

Die beiden Fügepartner werden miteinander verschweißt, indem in einer kurz als Schweißnaht bezeichneten Kontaktzone zwischen einer Fügefläche des intransparenten Fügepartners und einer dieser gegenüberliegenden Oberfläche des transparenten Fügepartners eine stoffschlüssige Verbindung ausgebildet wird, wobei das ohne Einwirkung des Laserlichts ansonsten feste Material zumindest eines der Fügepartner in der Kontaktzone durch das Laserlicht zumindest kurzzeitig aufgeschmolzen wird und sich mit dem Material des verbleibenden Fügepartners vereint. Durch anschließendes Abkühlen härtet die Schweißnaht aus.

Das Laserlicht wird hierbei durch den transparenten Fügepartner hindurch auf die Fügefläche des intransparenten Fügepartners gerichtet.

Das Verfahren zeichnet sich dadurch aus, dass das Laserlicht unter einem Neigungswinkel zu einer kurz als Flächennormalen bezeichneten, in einem Absorptionspunkt normal auf der Fügefläche des intransparenten Fügepartners in der Kontaktzone aufstehenden Achse geneigt von dessen Einkopplung in den transparenten Fügepartner bis zu dessen zumindest weitgehenden Absorption durch den intransparenten Fügepartner am Absorptionspunkt innerhalb des transparenten Fügepartners propagiert.

Das Verfahren kann dabei vorsehen, dass das Laserlicht unter einem Neigungswinkel zur Flächennormalen der Fügefläche des intransparenten Fügepartners in der Kontaktzone geneigt unter Totalreflexion (TIR; Total Internal Reflexion) in dem transparenten Fügepartner propagiert.

Das Verfahren kann alternativ oder zusätzlich vorsehen, dass das Laserlicht unter einem Neigungswinkel zur Flächennormalen der Fügefläche des intransparenten Fügepartners in der Kontaktzone geneigt in den transparenten Fügepartner eingekoppelt wird.

Der Ausdruck, wonach das Laserlicht im oder innerhalb des transparenten Fügepartners propagiert beschreibt hierbei die durch die auch als geometrische Optik bezeichnete, strahlenoptische Ausbreitung stattfindende Verteilung des Lichts im transparenten Fügepartner. Die geometrische Optik oder Strahlenoptik bedient sich des Strahlenmodells des Lichts. Sie behandelt auf einfache, rein geometrische Weise den Weg des Lichtes entlang von Linien. Zwar kommt einem auf eine Linie begrenzten Lichtstrahl keine physikalische Realität zu, dafür lässt sich mit Hilfe der Strahlenoptik die Funktion der optischen Abbildung mit ausreichender Genauigkeit beschreiben, wobei der Bildpunkt der optischen Abbildung im Fall des Laserdurchstrahlschweißens der auf der Fügefläche des intransparenten Fügepartners liegende Absorptionspunkt ist.

Besonders bevorzugt sieht das Verfahren eine seitliche Einkopplung des Laserlichts in eine auf einer der Kontaktzone gegenüberliegenden, abgewandten Seite aufstehende Wand, beispielsweise eine Seitenwand, des transparenten Fügepartners vor.

Eine seitliche Einkopplung in die Wand, beispielsweise eine Seitenwand des transparenten Fügepartners ist beispielswiese über einen optisch angekoppelten Lichtleiter denkbar, wobei sichergestellt werden muss, dass stets ein optischer Kontakt zwischen Lichtleiter und transparentem Fügepartner hergestellt wird. Wird dieser Kontakt nicht vollständig hergestellt, so kann es vorkommen, dass an den Stellen des Lichtleiters ohne optischen Kontakt das Laserlicht totalreflektiert und nicht in den transparenten Fügepartner eingekoppelt wird. Das Laserdurchstrahlschweißen, bei dem das Licht durch den transparenten Fügepartner hindurch propagierend auf die Fügefläche des intransparenten Fügepartners gerichtet wird ist dann nicht mehr möglich.

Besonders vorteilhaft sieht das Verfahren eine Laserlichteinkoppelstruktur an einer der auf der Kontaktzone gegenüberliegenden, abgewandten Seite aufstehenden Wand des transparenten Fügepartners, beispielsweise einer Seitenwand des transparenten Fügepartners, vor.

Ein zweiter Gegenstand der Erfindung betrifft ein zur Durchführung eines zuvor beschriebenen Verfahrens ausgestaltetes Fügeteil als einer von zwei Fügepartnern zum Laserdurchstrahlschweißen.

Bei den beiden Fügepartnern zum Laserdurchstrahlschweißen handelt es sich zum einen um einen durch das Fügeteil gebildeten ersten, transparenten Fügepartner und um einen zweiten, intransparenten Fügepartner. Das den ersten Fügepartner bildende Fügeteil ist aus einem für das zum Laserdurchstrahlschweißen verwendete Laserlicht im Wesentlichen transparenten Material hergestellt. Beim zweiten Fügepartner handelt es sich um einen intransparenten Fügepartner aus einem das zum Laserdurchstrahlschweißen verwendete Laserlicht im Wesentlichen absorbierenden Material. Sowohl das Material des transparenten Fügeteils, als auch das Material des intransparenten Fügepartners ist oder umfasst zumindest oder besteht aus Kunststoff.

Der transparente Fügepartner ist dasjenige Bauteil, das beim Laserdurchstrahlschweißen mit dem Laser durchstrahlt wird und dabei mit einer eine erste Schweißfläche einer Kontaktzone bildenden Oberfläche mit einem anderen Fügepartner an dessen eine der ersten Schweißfläche gegenüberliegende zweite Schweißfläche der Kontaktzone bildenden Fügefläche verschweißt wird. Dazu muss das Material des transparenten Fügepartners für elektromagnetische Strahlung der Wellenlänge des Schweißlasers ausreichend transparent sein, um für den Schweißprozess ausreichend Strahlungsleistung an die Fügefläche gelangen zu lassen.

Das Fügeteil weist eine als eine von zwei beim Laserdurchstrahlschweißen einander gegenüberliegende Schweißflächen einer kurz als Schweißnaht bezeichneten Kontaktzone zwischen einer eine erste Schweißfläche bildenden Oberfläche des transparenten Fügepartners und der dieser gegenüberliegenden, eine zweite Schweißfläche bildenden Fügefläche des intransparenten Fügepartners vorgesehene Oberfläche auf.

Das Fügeteil weist ferner eine auf einer der eine Schweißfläche der zwei beim Laserdurchstrahlschweißen einander gegenüberliegende Schweißflächen umfassenden Kontaktzone bildenden Oberfläche gegenüberliegenden, abgewandten Seite des Fügeteils aufstehende Wand auf, beispielsweise eine Seitenwand des transparenten Fügeteils.

Die Wand ist mit Einkoppel- und/oder Umlenkmitteln zur seitlichen Einkopplung des Lichts des Laserstrahls in die Wand und zur Umlenkung des Lichts zur die erste Schweißfläche der Kontaktzone bildenden Oberfläche des transparenten Fügepartners versehen.

Bei dem Fügeteil handelt es sich bevorzugt um eine Lichtscheibe einer Fahrzeugleuchte.

Bei der mit den Einkoppel- und/oder Umlenkmitteln ausgestatteten Wand handelt es sich hierbei bevorzugt um eine auf der in fertiggestelltem Zustand einer Fahrzeugleuchte einem Leuchteninnenraum zugewandten Rückseite der Lichtscheibe aufstehende Seitenwandpartie. Die Lichtscheibe kann seitlich über die Seitenwandpartie nach außerhalb des Leuchteninnenraums überstehen.

Die eine erste Schweißfläche der Kontaktzone bildenden Oberfläche des den transparenten Fügepartner bildenden Fügeteils kann stirnseitig an einer umlaufenden Wand, beispielsweise einer Seitenwand, etwa einer Lichtscheibe ausgebildet sein, oder nur an einer ein- oder zwei- oder mehrseitig vorgesehenen, beispielsweise nicht vollständig etwa um eine Lichtscheibe umlaufenden Wand vorgesehen sein.

Beispielsweise In einer solchen Wand des transparenten Fügeteils, insbesondere einer Seitenwand, kann eine Lichteinkoppelstruktur als Einkoppel- und/oder Umlenkmittel oder als Teil der Einkoppel- und/oder Umlenkmittel des Laserlichts zur eine erste Schweißfläche der Kontaktzone bildenden Oberfläche hin vorgesehen sein.

Diese Lichteinkoppelstruktur kann sowohl mikro-, als auch makroskopische Ausmaße aufweisen.

Seitlich von außen auf die Lichteinkoppelstruktur gerichtetes Laserlicht wird hierdurch seitlich in die auf der eine erste Schweißfläche der Kontaktzone bildende Oberfläche aufstehende Wand des den transparenten Fügepartner bildenden Fügeteils eingekoppelt und zur Schweißfläche hin umgelenkt.

Unter einer in eine Fläche eingebrachten Lichteinkoppelstruktur wird eine lokal begrenzte gezielte Abweichung vom Verlauf der Fläche durch Erhöhungen oder Vertiefungen verstanden. Die Lichteinkoppelstruktur kann sich über die vollständige Fläche erstrecken oder auch nur Teilbereiche bedecken, sie lässt jedoch den Verlauf der Fläche, in die sie eingebracht wurde, weiterhin erkennen. Die in die Fläche eingebrachte Lichteinkoppelstruktur kann mikroskopisch, d.h. vorwiegend wellenoptisch wirksam sein, oder makroskopisch, d.h. vorwiegend geometrisch-optisch wirksam, sein, aber auch beide Merkmale aufweisen.

Die mit der Lichteinkoppelstruktur versehene Seitenwand des transparenten Fügeteils steht bevorzugt unter einem Winkel von 60° bis 120° auf der eine erste Schweißfläche der Kontaktzone bildende Oberfläche des den transparenten Fügepartner bildenden Fügeteils auf.

Beim Stand der Technik muss das Laserlicht normal auf die eine erste Schweißfläche der Kontaktzone bildende Oberfläche des transparenten Fügepartners gerichtet in den transparenten Fügepartner eingekoppelt werden, was aufgrund von Lichtstreuung und -absorption entlang des langen Pfades durch eine hohe, auf der Schweißfläche aufstehende Seitenwand des transparenten Fügepartners hindurch zu verminderter Schweißnahtqualität führt, im Extremfall ein Laserschweißen nicht zulässt.

Die vorliegende Erfindung erlaubt das Laserschweißen auch bei solchen Geometrien der Fügepartneranordnung, die bislang nicht dem Laserschweißen zugänglich waren.

Besitzt der transparente Fügepartner eine ausreichend lange Schweißrippe oder eine näherungsweise senkrecht zur der eine zweite Schweißfläche der Kontaktzone bildenden Fügefläche des intransparenten Fügepartners gegenüberliegenden, eine erste Schweißfläche der Kontaktzone bildenden Oberfläche des Fügeteils stehende Seitenwand, kann die Lichteinkopplung auch von der Seite erfolgen. Hierzu werden vorteilhaft eine oder mehrere Lichteinkoppelstrukturen in die Seitenwand des transparenten Fügepartners eingebracht. Die Lichteinkoppelstrukturen sind so gestaltet, dass sie eine gezielte Bestrahlung der Schweißnaht mit Laserlicht ermöglichen, vorzugsweise ohne dass ein optischer Kontakt eines Lichtleiters zur Seitenwand des den transparenten Fügepartner bildenden Fügeteils erforderlich ist. Die Lichteinkopplung in den transparenten Fügepartner an der Lichteinkoppelstruktur kann sowohl direkt aus Luft als auch mit Hilfe eines angepassten Lichtleiters erfolgen, der das Laserlicht zur Lichteinkoppelstruktur leitet.

Die Erfindung beschreibt ein Fügeteil als transparenten Fügepartner zum Laserdurchstrahllaserschweißen sowie ein laserdurchstrahlgeschweißtes Fügeteil, das eine oder mehrere seitliche Lichteinkoppelstrukturen für Laserlicht besitzt. Darüber hinaus wird ein Verfahren zum Laserdurchstrahlschweißen beschrieben, bei dem die Strahlung des Lasers mit Hilfe einer Lichteinkoppelstruktur im transparenten Fügepartner in denselben seitlich eingekoppelt wird.

Vorteilhaft wird zumindest in Teilbereiche einer Seitenfläche des den transparenten Fügepartner bildenden Fügeteils, beispielsweise in eine auf der der eine Schweißfläche der Kontaktzone bildenden Oberfläche abgewandten Seite des Fügeteils gegenüberliegend dieser Oberfläche aufstehenden Wand, beispielsweise einer Seitenwand, bevorzugt eine Lichteinkoppelstruktur eingebracht, die eine Laserstrahlungseinkopplung in das Fügeteil ermöglicht, sodass die Laserstrahlung die die Fügezone bildende Kontaktzone mit den einander gegenüberliegenden Schweißflächen der beiden Fügepartner gezielt mit für den Schweißprozess ausreichender Strahlungsleistung erreicht. Die Struktur ist so gestaltet, dass die Laserstrahlung auch ohne optischen Kontakt eines nicht zum Fügeteil gehörenden Lichtleiters in der gewünschten Weise eingekoppelt werden kann.

Unter einer Seitenfläche des Fügeteils wird hier beispielsweise ein Teil der Außenoberfläche des Fügeteils verstanden, deren Tangentialebene unter außer Acht lassen der erfindungsgemäßen Einkoppelstruktur einen Winkel zwischen 60° und 120° zur Tangentialebene an die Stelle der Schweißfläche aufweist, die diesem Teil der Außenoberfläche am nächsten liegt.

Wichtig ist hervorzuheben, dass die Begriffe Strahlung und Licht in der vorliegenden Beschreibung synonym verwendet werden, wobei darunter elektromagnetische Strahlung verstanden wird, deren Wellenlänge zwischen 100 nm und 3000 nm liegt. Bevorzugt liegt die Wellenlänge der elektromagnetischen Strahlung zwischen 700 und 2200 nm. Transparenz meint hier immer Transparenz für elektromagnetische Strahlung in einem Teilbereich dieser Wellenlängen. Es ist nicht ausgeschlossen, dass beide Fügepartner für einige Wellenlängenbereiche transparent sind. Als transparenter Fügepartner wird jedoch immer der im Schweißprozess durchstrahlte Fügepartner verstanden.

Unter Laserstrahlungseinkopplung in den transparenten Fügepartner wird das Eindringen gerichtet auftreffender elektromagnetischen Strahlung in das Volumen des für die Wellenlänge der Strahlung transparenten Mediums verstanden, wobei mindestens 60% der auf die Oberfläche auftreffenden gerichteten Strahlung im Volumen des transparenten Fügepartners zur Fügefläche geleitet werden.

Eine erfindungsgemäße Lichteinkoppelstruktur zur Laserstrahlungseinkopplung kann auf der Außenoberfläche angebracht sein, an der das Licht in den transparenten Fügepartner eingekoppelt wird, aber auch auf einer der Einkoppelstelle gegenüberliegenden Seitenfläche. Im erstgenannten Fall ermöglicht die Einkoppeloptik eine verlustarme Einkopplung des Laserlichts in den transparenten Fügepartner, im letztgenannten Fall verhindert die Einkoppeloptik das Wiederaustreten des Lichts aus dem transparenten Fügepartner und lenkt es so zur Fügefläche. Auch dieses Verhindern des Wiederaustretens der Strahlung soll hier unter den Begriff Laserstrahlungseinkopplung fallen.

Es ist ersichtlich, dass die Erfindung verwirklicht sein kann durch eine an einem aus einem für das Laserdurchstrahlschweißen verwendeten Laserlicht transparenten Werkstoff hergestellten ersten Fügepartner von zwei durch Laserdurchstrahlschweißen miteinander zu verbindenden Fügepartnern vorgesehene Einkoppelstruktur zur seitlichen Einkopplung des Laserlichts für das Laserdurchstrahlschweißen. Die Einkoppelstruktur verkürzt den Laufweg des Laserlichts im mit ihr versehenen Fügepartner bis zur Schweißnaht. Die Schweißnaht befindet sich zwischen zwei aneinander angrenzenden Flächen der beiden Fügepartner. Bei den aneinander angrenzenden Flächen handelt es sich um eine Fügefläche des intransparenten Fügepartners und um eine dieser gegenüberliegende Oberfläche des transparenten Fügepartners.

Der intransparente Fügepartner besteht bevorzugt aus einem das für das Laserdurchstrahlschweißen verwendete Laserlicht zumindest weitgehend absobierenden Werkstoff.

Vorteile gegenüber dem Stand der Technik sind, dass sich durch die beispielsweise eine an einer auf einer eine erste Schweißfläche einer Kontaktzone bildenden Oberfläche eines einen transparenten Fügepartner bildenden Fügeteils aufstehenden Wand, etwa einer Seitenwand vorgesehenen Lichteinkoppelstruktur umfassenden Einkoppel- und/oder Umlenkmittel Fügepartner laserverschweißen lassen, die sich anders nicht prozesssicher Laserschweißen lassen. Zu erwähnen sind hier beispielsweise Fügepartner mit einer sehr hohen Seitenwand des transparenten Fügepartners, die aufgrund der optischen Weglänge im Material nicht von der der Fügefläche gegenüberliegenden Seite durchleuchtet werden kann. Auch Verrundungen oder Kanten an der der eine der beiden gegenüberliegenden Schweißflächen der Kontaktzone bildenden Fügefläche des intransparenten Fügepartners gegenüber liegenden, die verbleibende Schweißfläche der Kontaktzone bildenden Oberfläche des transparenten Fügepartners verhindern ohne die bevorzugt eine Lichteinkoppelstruktur umfassende Einkoppel- und/oder Umlenkmittel oft die gerichtete Lichteinkopplung und erschweren dadurch den Schweißprozess.

So entsteht mit der Erfindung ein wesentlich größerer Gestaltungsspielraum in der Geometrie des transparenten Fügepartners. Dies kann mehr Freiheiten zum Design, aber auch neue technische Möglichkeiten eröffnen.

Das Fügeteil kann einzelne oder eine Kombination der zuvor und/oder nachfolgend in Verbindung mit dem Verfahren beschriebene Merkmale aufweisen, ebenso wie das Verfahren einzelne oder eine Kombination mehrerer zuvor und/oder nachfolgend in Verbindung mit dem Fügeteil beschriebene Merkmale aufweisen und/oder verwirklichen kann.

Sowohl das Verfahren, als auch das Fügeteil können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:

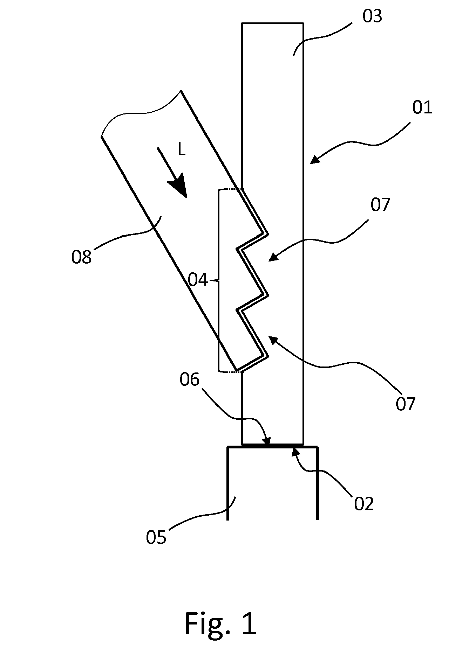

- Fig. 1: ein Schnittbild eines ersten Ausführungsbeispiels einer an einer auf einer einer eine erste Schweißfläche der Kontaktzone bildenden Oberfläche gegenüberliegenden, abgewandten Seite eines Fügeteils aufstehenden Wand des Fügeteils vorgesehenen Lichteinkoppelstruktur, via welcher Wand Laserlicht via der Lichteinkoppelstruktur mit einem speziell angepassten Lichtleiter seitlich in das Fügeteil eingekoppelt wird. Die Einfallsrichtung des Laserlichts für das Laserdurchstrahlschweißen ist durch einen Pfeil L gekennzeichnet. Das Laserlicht wird nach dem Einkoppeln im Innern des den transparenten Fügepartner bildenden Fügeteils über Totalreflexion zur der Oberfläche gegenüberliegenden, eine zweite Schweißfläche der Kontaktzone bildenden Fügefläche des intransparenten Fügepartners geleitet.

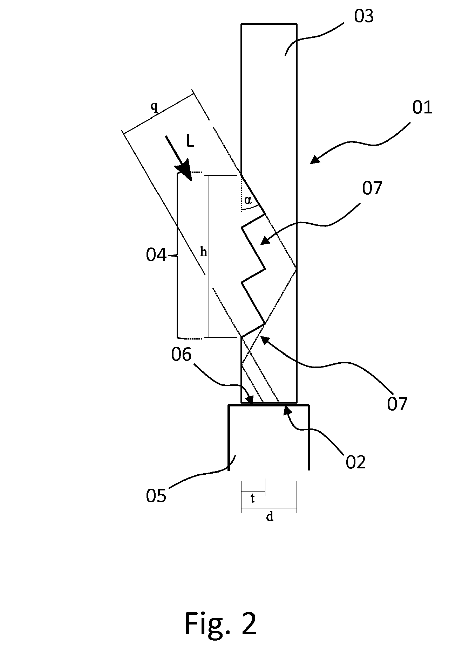

- Fig. 2: ein Schnittbild eines zweiten Ausführungsbeispiels einer an einer auf einer einer eine erste Schweißfläche der Kontaktzone bildenden Oberfläche gegenüberliegenden, abgewandten Seite eines Fügeteils aufstehenden Wand des Fügeteils vorgesehenen Lichteinkoppelstruktur, via welcher Wand Laserlicht via der Lichteinkoppelstruktur seitlich in das Fügeteil eingekoppelt wird. Die Einfallsrichtung des Laserlichts für das Laserdurchstrahlschweißen ist durch einen Pfeil L gekennzeichnet. Das Laserlicht wird nach dem Einkoppeln im Innern des den transparenten Fügepartner bildenden Fügeteils über Totalreflexion zur der Oberfläche gegenüberliegenden, eine zweite Schweißfläche der Kontaktzone bildenden Fügefläche des intransparenten Fügepartners geleitet. Die Bemaßungen kennzeichnen q: Strahlquerschnitt, a: Prismenwinkel, h: Höhe der Einkoppelstruktur, t: Tiefe der Einkoppelstruktur, d: Dicke der Wand des transparenten Fügepartners.

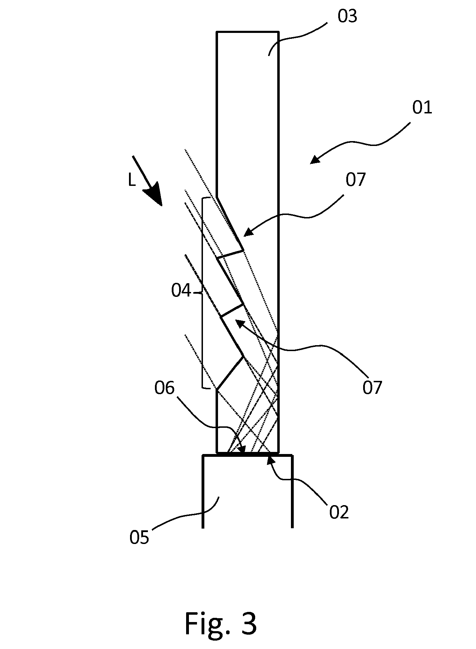

- Fig. 3: ein Schnittbild eines dritten Ausführungsbeispiels einer an einer auf einer einer eine erste Schweißfläche der Kontaktzone bildenden Oberfläche gegenüberliegenden, abgewandten Seite eines Fügeteils aufstehenden Wand des Fügeteils vorgesehenen Lichteinkoppelstruktur, via welcher Wand Laserlicht via der Lichteinkoppelstruktur seitlich in das Fügeteil eingekoppelt wird. Die Einfallsrichtung des Laserlichts für das Laserdurchstrahlschweißen ist durch einen Pfeil L gekennzeichnet. Das Laserlicht wird nach dem Einkoppeln im Innern des den transparenten Fügepartner bildenden Fügeteils über Totalreflexion zur der Oberfläche gegenüberliegenden, eine zweite Schweißfläche der Kontaktzone bildenden Fügefläche des intransparenten Fügepartners geleitet. Die unterschiedlichen Winkel der Einkoppelprismen der Lichteinkoppelstruktur sorgen für eine zusätzliche Fokussierung des Laserlichts auf die Fügefläche.

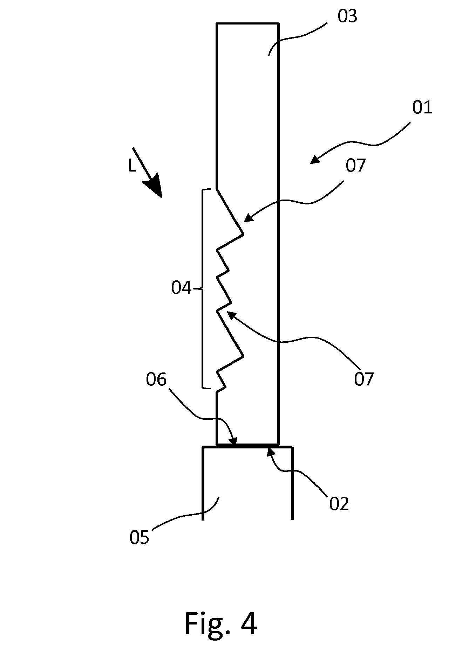

- Fig. 4: ein Schnittbild eines vierten Ausführungsbeispiels einer an einer auf einer einer eine erste Schweißfläche der Kontaktzone bildenden Oberfläche gegenüberliegenden, abgewandten Seite eines Fügeteils aufstehenden Wand des Fügeteils vorgesehenen Lichteinkoppelstruktur, via welcher Wand Laserlicht via der Lichteinkoppelstruktur seitlich in das Fügeteil eingekoppelt wird. Die Einfallsrichtung des Laserlichts für das Laserdurchstrahlschweißen ist durch einen Pfeil L gekennzeichnet. Das Laserlicht wird nach dem Einkoppeln im Innern des den transparenten Fügepartner bildenden Fügeteils über Totalreflexion zur der Oberfläche gegenüberliegenden, eine zweite Schweißfläche der Kontaktzone bildenden Fügefläche des intransparenten Fügepartners geleitet. Die Einkoppelprismen der Lichteinkoppelstruktur weisen unterschiedliche Tiefen auf, um den Strahlquerschnitt zu erhöhen und das visuelle Erscheinungsbild der Struktur zu verändern.

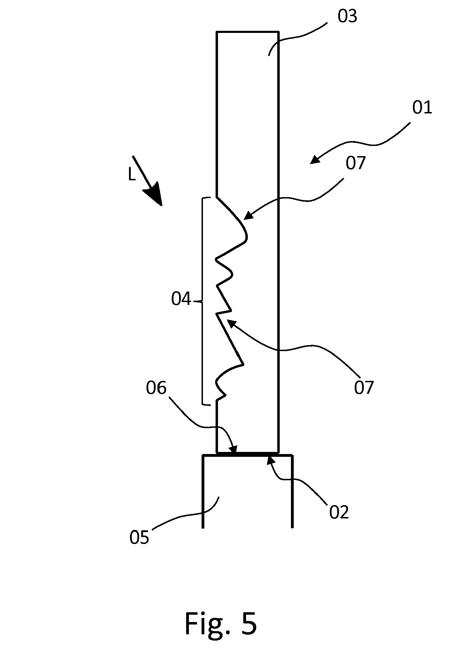

- Fig. 5: ein Schnittbild eines fünften Ausführungsbeispiels einer an einer auf einer einer eine erste Schweißfläche der Kontaktzone bildenden Oberfläche gegenüberliegenden, abgewandten Seite eines Fügeteils aufstehenden Wand des Fügeteils vorgesehenen Lichteinkoppelstruktur, via welcher Wand Laserlicht via der Lichteinkoppelstruktur seitlich in das Fügeteil eingekoppelt wird. Die Einfallsrichtung des Laserlichts für das Laserdurchstrahlschweißen ist durch einen Pfeil L gekennzeichnet. Das Laserlicht wird nach dem Einkoppeln im Innern des den transparenten Fügepartner bildenden Fügeteils über Totalreflexion zur der Oberfläche gegenüberliegenden, eine zweite Schweißfläche der Kontaktzone bildenden Fügefläche des intransparenten Fügepartners geleitet. Die Einkoppelprismen der Lichteinkoppelstruktur weisen Krümmungen und Abrundungen auf, wobei die Struktur weiterhin eine effiziente Einkopplung ermöglicht.

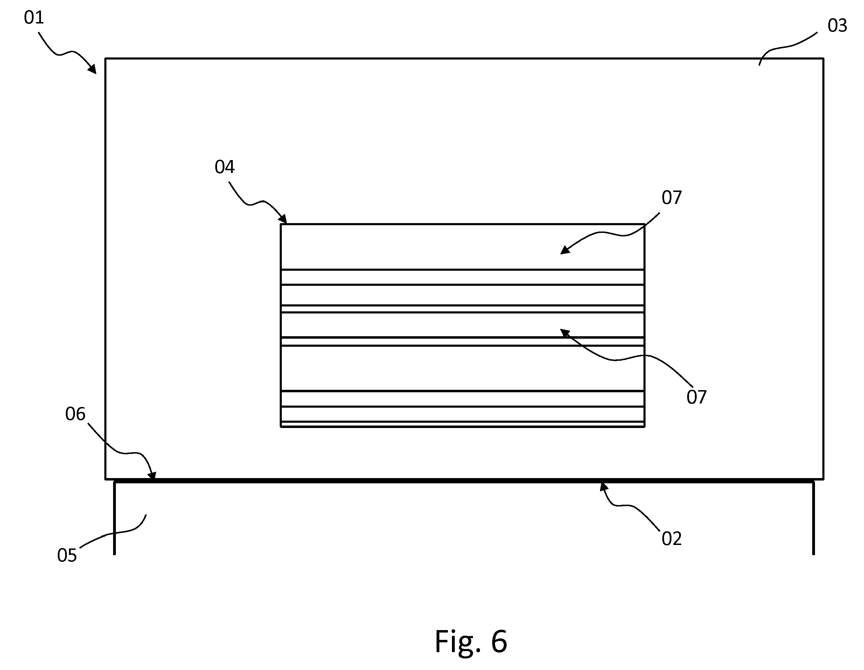

- Fig. 6: eine Seitenansicht eines Ausführungsbeispiels einer Einkoppelstruktur mit einem in Fig. 4 dargestellten Schnittbild.

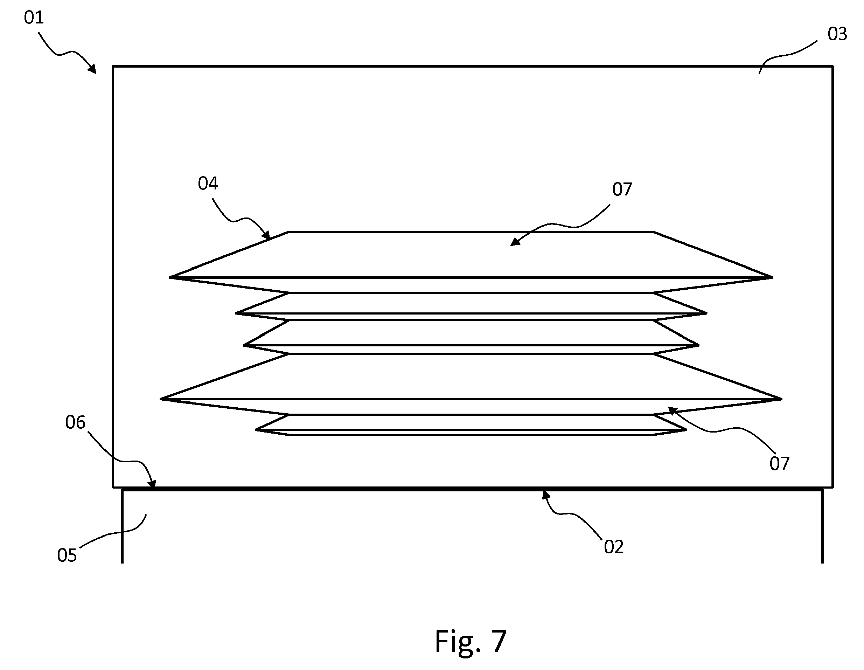

- Fig. 7: eine Seitenansicht eines Ausführungsbeispiels einer Einkoppelstruktur mit einem in Fig. 4 dargestellten Schnittbild, bei der die Kanten sanft auslaufen, um ein angenehmes optisches Erscheinungsbild zu erzeugen.

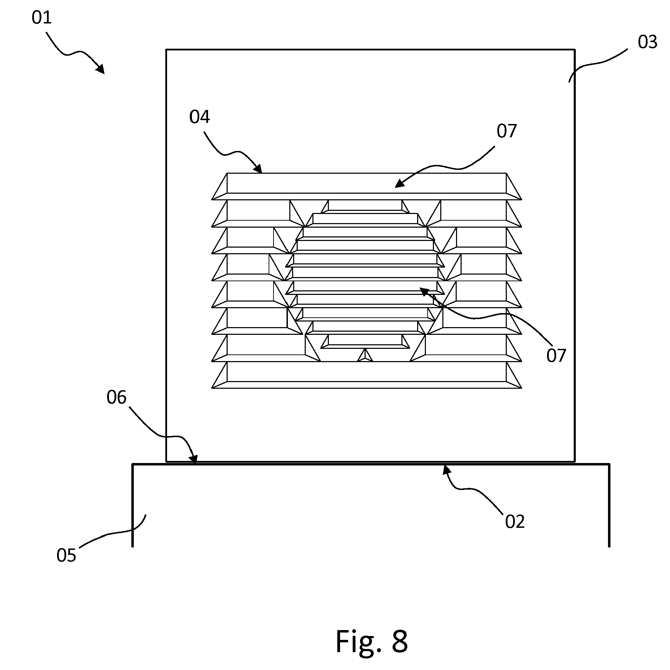

- Fig. 8: eine Seitenansicht eines Ausführungsbeispiels einer Einkoppelstruktur, bei der die Strukturgröße der Einkoppelprismen der Lichteinkoppelstruktur variiert wurde, um ein angenehmes optisches Erscheinungsbild zu erzeugen.

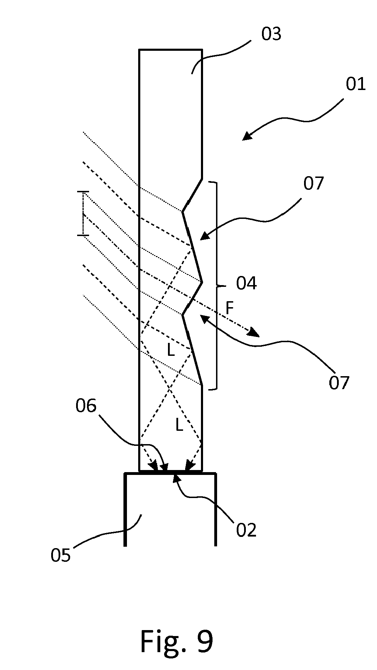

- Fig. 9: ein Schnittbild eines sechsten Ausführungsbeispiels einer an einer auf einer einer eine erste Schweißfläche der Kontaktzone bildenden Oberfläche gegenüberliegenden, abgewandten Seite eines Fügeteils aufstehenden Wand des Fügeteils vorgesehenen Lichteinkoppelstruktur, via welcher Wand Laserlicht seitlich in das Fügeteil eingekoppelt und vermittels der Lichteinkoppelstruktur am Wiederaustritt auf der gegenüberliegenden Seite der Wand gehindert wird. Hierbei treten in der Regel höhere Lichtverluste auf als bei einer Einkoppelstruktur auf der Lichteintrittsseite. In der Abbildung ist ein solcher unwirksamer Bereich durch einen mit einem Pfeil F markierten Lichtstrahl, der gegenüberliegend der Lichteinkopplung wieder austritt, gekennzeichnet. Der Lichtweg ist durch Pfeile L veranschaulicht.

Ein in Fig. 1, Fig. 2, Fig. 3, Fig. 4, Fig. 5, Fig. 6, Fig. 7, Fig. 8, Fig. 9 ganz oder in Teilen dargestelltes, zur Durchführung eines nachfolgend noch beschriebenen Verfahrens zum Laserdurchstrahlschweißen vorgesehenes und/oder geeignetes Fügeteil 01 aus einem für zum Laserdurchstrahlschweißen verwendetes, in Fig. 1, Fig. 2, Fig. 3, Fig. 4, Fig. 5, Fig. 9 durch Pfeile L und in Fig. 9 zusätzlich durch einen Pfeil F dargestelltes Laserlicht im Wesentlichen transparenten Material umfasst:
- eine Oberfläche 02, welche eine erste Schweißfläche von zwei beim Laserdurchstrahlschweißen in einer Kontaktzone einander gegenüberliegenden Schweißflächen bildet, und
- eine auf einer der Oberfläche 02 gegenüberliegenden, abgewandten Seite des Fügeteils 01 aufstehende Wand 03.

Das Fügeteil 01 weist Einkoppel- und/oder Umlenkmittel 04 zur seitlichen Einkopplung des Laserlichts in die Wand 03 und/oder zur Umlenkung des Laserlichts zu der die erste Schweißfläche der Kontaktzone bildenden Oberfläche 02 des den transparenten Fügepartner zweier miteinander durch Laserdurchstrahlschweißen stoffschlüssig miteinander zu verbindender Fügepartner, einem transparenten Fügepartner und einem intransparenten Fügepartner 05, bildenden Fügeteils 01 auf.

Zum Laserdurchstrahlschweißen liegt der die erste Schweißfläche bildenden Oberfläche 03 des den transparenten Fügepartner bildenden Fügeteils 01 in der Kontaktzone eine Fügefläche 06 des intransparenten Fügepartners 05 gegenüber.

Bei den beiden Fügepartnern zum Laserdurchstrahlschweißen handelt es sich zum einen um einen durch das Fügeteil 01 gebildeten ersten, transparenten Fügepartner und um einen zweiten, intransparenten Fügepartner 05. Das den ersten Fügepartner bildende Fügeteil 01 ist aus einem für das zum Laserdurchstrahlschweißen verwendete Laserlicht im Wesentlichen transparenten Material hergestellt. Beim zweiten Fügepartner 05 handelt es sich um einen intransparenten Fügepartner 05 aus einem das zum Laserdurchstrahlschweißen verwendete Laserlicht im Wesentlichen absorbierenden Material.

Sowohl das Material des transparenten Fügeteils 01, als auch das Material des intransparenten Fügepartners 05 ist oder umfasst zumindest oder besteht aus Kunststoff.

Der transparente Fügepartner ist dasjenige Bauteil, das beim Laserdurchstrahlschweißen mit dem Laserlicht durchstrahlt wird und dabei mit einer eine erste Schweißfläche einer Kontaktzone bildenden Oberfläche 02 mit einem anderen, nämlich intransparenten Fügepartner 05 an dessen eine der ersten Schweißfläche gegenüberliegende zweite Schweißfläche der Kontaktzone bildenden Fügefläche 06 verschweißt wird. Dazu muss das Material des transparenten Fügepartners für elektromagnetische Strahlung der Wellenlänge des Laserlichts ausreichend transparent sein, um für das Laserdurchstrahlschweißen ausreichend Strahlungsleistung an die Fügefläche 06 gelangen zu lassen.

Bei dem Fügeteil 01 handelt es sich beispielsweise um eine Lichtscheibe einer Fahrzeugleuchte.

Handelt es sich bei dem Fügeteil 01 um eine Lichtscheibe einer Fahrzeugleuchte, so kann es sich bei der mit den Einkoppel- und/oder Umlenkmitteln 04 ausgestatteten, Wand 03 beispielsweise um eine auf der in fertiggestelltem Zustand einer Fahrzeugleuchte einem Leuchteninnenraum zugewandten Rückseite der Lichtscheibe aufstehende Seitenwandpartie handeln, welche mit der eine erste Schweißfläche in der Kontaktzone bildenden Oberfläche 02 endet beziehungsweise abschließt. Die Lichtscheibe kann seitlich über die Seitenwandpartie nach außerhalb des Leuchteninnenraums überstehen.

Besonders bevorzugt ist die Wand 03 mit mindestens einer Lichteinkoppelstruktur 07 versehen. Die eine oder mehreren Lichteinkoppelstrukturen 07 sind zumindest Teil der Einkoppel- und/oder Umlenkmittel 04 oder umfassen die Einkoppel- und/oder Umlenkmittel 04 oder werden von den Einkoppel- und/oder Umlenkmitteln 04 ganz oder teilweise umfasst.

Beispielsweise kann die Wand 03 an einer an die eine erste Schweißfläche der Kontaktzone bildenden Oberfläche 02 angrenzenden Fläche mit mindestens einer Lichteinkoppelstruktur 07 als wenigstens ein Teil der Einkoppel- und/oder Umlenkmittel 04 versehen sein.

Unter einer in eine Fläche eingebrachten Lichteinkoppelstruktur 07 wird eine lokal begrenzte gezielte Abweichung vom Verlauf der Fläche durch eine oder mehrere Erhöhungen oder Vertiefungen verstanden. Die Lichteinkoppelstruktur 07 kann sich über die vollständige Fläche erstrecken oder auch nur Teilbereiche bedecken, sie lässt jedoch den Verlauf der Fläche, in die sie eingebracht wurde, weiterhin erkennen. Die in die Fläche eingebrachte Lichteinkoppelstruktur 07 kann mikroskopisch, beispielsweise vorwiegend wellenoptisch wirksam sein, oder makroskopisch, beispielsweise vorwiegend geometrisch-optisch wirksam, sein, aber auch beide Merkmale aufweisen.

Besonders vorteilhaft steht die Wand 03 des während des Laserdurchstrahlschweißens den transparenten Fügepartner bildenden Fügeteils 01 unter einem Winkel von 60° bis 120° auf der der eine erste Schweißfläche der Kontaktzone bildenden Oberfläche 02 gegenüberliegenden, abgewandten Seite des Fügeteils 01 auf.

Die eine erste Schweißfläche der Kontaktzone bildenden Oberfläche 02 des während des Laserdurchstrahlschweißens den transparenten Fügepartner bildenden Fügeteils 01 kann stirnseitig an einer umlaufenden Wand 03, beispielsweise einer Seitenwand, etwa einer Lichtscheibe ausgebildet sein, oder nur an einer ein- oder zwei- oder mehrseitig vorgesehenen, beispielsweise nicht vollständig etwa um eine Lichtscheibe umlaufenden Wand 03 vorgesehen sein.

Beispielsweise in einer solchen Wand 03, insbesondere einer Seitenwand, des während des Laserdurchstrahlschweißens den transparenten Fügepartner bildenden Fügeteils 01, kann eine Lichteinkoppelstruktur 07 als Einkoppel- und/oder Umlenkmittel 04 oder als Teil der Einkoppel- und/oder Umlenkmittel 04, welche das Laserlicht in das Fügeteil 01 einkoppeln und/oder zur eine erste Schweißfläche der Kontaktzone bildenden Oberfläche 02 hin umlenken vorgesehen sein.

Diese Lichteinkoppelstruktur 07 kann sowohl mikro-, als auch makroskopische Ausmaße aufweisen.

Seitlich von außen auf die Lichteinkoppelstruktur 07 gerichtetes Laserlicht wird hierdurch seitlich in die auf der der eine erste Schweißfläche der Kontaktzone bildende Oberfläche 02 gegenüberliegenden, abgewandten Seite des Fügeteils 01 aufstehende Wand 03 des den transparenten Fügepartner bildenden Fügeteils 01 eingekoppelt und zur Schweißfläche hin umgelenkt.

Beim Stand der Technik muss das Laserlicht normal auf die eine erste Schweißfläche der Kontaktzone bildende Oberfläche des transparenten Fügepartners gerichtet in den transparenten Fügepartner eingekoppelt werden, was aufgrund von Lichtstreuung und -absorption entlang des langen Pfades durch eine hohe, auf der Schweißfläche aufstehende Seitenwand des transparenten Fügepartners hindurch zu verminderter Schweißnahtqualität führt, im Extremfall ein Laserschweißen nicht zulässt.

Die vorliegende Erfindung erlaubt das Laserschweißen auch bei solchen Geometrien der Fügepartneranordnung, die bislang nicht dem Laserschweißen zugänglich waren.

Besitzt der transparente Fügepartner eine ausreichend lange Schweißrippe oder eine beispielsweise näherungsweise senkrecht zur der eine zweite Schweißfläche der Kontaktzone bildenden Fügefläche 06 des intransparenten Fügepartners 05 gegenüberliegenden, eine erste Schweißfläche der Kontaktzone bildenden Oberfläche 02 des Fügeteils 01 stehende Seitenwand, kann die Lichteinkopplung erfindungsgemäß von der Seite erfolgen. Hierzu werden vorteilhaft eine oder mehrere Lichteinkoppelstrukturen 07 in die Seitenwand des den transparenten Fügepartner beim Laserdurchstrahlschweißen bildenden Fügeteils 01 eingebracht. Die Lichteinkoppelstrukturen 07 sind so gestaltet, dass sie eine gezielte Bestrahlung der kurz auch als Schweißnaht bezeichneten Kontaktzone mit den beiden einander gegenüberliegenden und zumindest punktuell in Kontakt stehenden Schweißflächen mit Laserlicht ermöglichen, beispielsweise ohne dass ein optischer Kontakt eines Lichtleiters 08 zur Seitenwand des den transparenten Fügepartner bildenden Fügeteils 01 erforderlich ist.

Die Lichteinkopplung in den transparenten Fügepartner an der Lichteinkoppelstruktur 07 kann demnach sowohl direkt aus der Luft als auch mit Hilfe eines angepassten Lichtleiters 08 erfolgen (Fig. 1), der das Laserlicht zur Lichteinkoppelstruktur 07 leitet.

Die Erfindung beschreibt ein Fügeteil 01 als transparenten Fügepartner zum Laserdurchstrahllaserschweißen sowie ein laserdurchstrahlgeschweißtes Fügeteil 01, das eine oder mehrere seitliche Lichteinkoppelstrukturen 07 für Laserlicht besitzt. Darüber hinaus wird nachfolgend noch ein Verfahren zum Laserdurchstrahlschweißen beschrieben, bei dem die Strahlung des Lasers mit Hilfe einer Lichteinkoppelstruktur 07 im transparenten Fügepartner in denselben seitlich eingekoppelt wird.

Vorteilhaft wird zumindest in Teilbereiche einer Seitenfläche des beim Laserdurchstrahlschweißen den transparenten Fügepartner bildenden Fügeteils 01, beispielsweise in eine auf der der eine Schweißfläche der Kontaktzone bildenden Oberfläche 02 abgewandten Seite des Fügeteils 01 gegenüberliegend dieser Oberfläche 02 aufstehenden Wand 03, beispielsweise einer Seitenwand, bevorzugt eine Lichteinkoppelstruktur 07 eingebracht, die eine Einkopplung von Laserlicht in das Fügeteil 01 ermöglicht, sodass das Laserlicht die eine Fügezone bildende Kontaktzone mit den einander gegenüberliegenden Schweißflächen der beiden Fügepartner gezielt mit für den Schweißprozess ausreichender Strahlungsleistung erreicht. Die Struktur ist so gestaltet, dass das Laserlicht auch ohne optischen Kontakt eines nicht zum Fügeteil 01 gehörenden Lichtleiters 08 in der gewünschten Weise eingekoppelt werden kann.

Unter einer Seitenfläche des Fügeteils 01 wird hier beispielsweise ein Teil der Außenoberfläche des Fügeteils 01 verstanden, deren Tangentialebene unter außer Acht lassen einer Lichteinkoppelstruktur 07 einen Winkel zwischen 60° und 120° zur Tangentialebene an die Stelle der Schweißfläche aufweist, die diesem Teil der Außenoberfläche am nächsten liegt.

Wichtig ist hervorzuheben, dass die Begriffe Strahlung und Licht in der vorliegenden Beschreibung synonym verwendet werden, wobei darunter elektromagnetische Strahlung verstanden wird, deren Wellenlänge zwischen 100 nm und 3000 nm liegt. Bevorzugt liegt die Wellenlänge der elektromagnetischen Strahlung zwischen 700 und 2200 nm. Transparenz meint hier immer Transparenz für elektromagnetische Strahlung in einem Teilbereich dieser Wellenlängen. Es ist nicht ausgeschlossen, dass beide Fügepartner für einige Wellenlängenbereiche transparent sind. Als transparenter Fügepartner wird jedoch immer der im Schweißprozess durchstrahlte Fügepartner verstanden.

Unter Laserstrahlungseinkopplung in den transparenten Fügepartner wird das Eindringen gerichtet auftreffender elektromagnetischen Strahlung in das Volumen des für die Wellenlänge der Strahlung transparenten Mediums verstanden, wobei mindestens 60% der auf die Oberfläche auftreffenden gerichteten Strahlung im Volumen des transparenten Fügepartners zur Fügefläche geleitet werden.

Eine Lichteinkoppelstruktur 07 zur Einkoplung von Laserlicht kann auf der Außenoberfläche angebracht sein, an der das Licht in den transparenten Fügepartner eingekoppelt wird (Fig. 1, Fig. 2, Fig. 3, Fig. 4, Fig. 5, aber auch auf einer der Einkoppelstelle gegenüberliegenden Seitenfläche (Fig. 9). Im erstgenannten Fall ermöglicht die Lichteinkoppelstruktur 07 als Teil der Einkoppel- und/oder Umlenkmittel 04 eine verlustarme Einkopplung des Laserlichts in den transparenten Fügepartner, im letztgenannten Fall verhindert die Lichteinkoppelstruktur 07 das Wiederaustreten des Laserlichts aus dem transparenten Fügepartner und lenkt es so zur Fügefläche. Auch dieses Verhindern des Wiederaustretens der Strahlung soll hier unter den Begriff Laserstrahlungseinkopplung fallen.

Fig. 1 und Fig. 2 zeigen den Schnitt durch einen Teilbereich eines Fügeteils 01 mit einer Lichteinkoppelstruktur 07 zumindest als Teil der Einkoppel- und/oder Umlenkmittel 04. Die Lichteinkoppelstruktur 07 besteht aus gleichartigen prismenförmigen Vertiefungen auf der Lichteinkoppelseite der Wand 03. Das Laserlicht wird über einen speziell angepassten Lichtleiter 08 (Fig. 1) oder als Laserstrahl (Fig. 2) über die Lichteinkoppelstruktur 07 in die Wand 03 eingekoppelt. Der Pfeil L in Fig. 1 und Fig. 2 markiert die Einfallsrichtung des Laserlichts. Bei gleichartigen Prismen liegt die sinnvolle Gesamthöhe der Struktur im Bereich von (Bezeichnungen siehe Fig. 2) h=(2*d*cos²(a)-t*cos(2*a))/(sin(a)*cos(a)) und der damit einkoppelbare Strahlquerschnitt bei etwa q=(2*d*cos2(a)-t*cos(2*a))/cos(a).

Fig. 3 zeigt den Querschnitt einer Ausführung ähnlich der in Fig. 1 und Fig. 2 jedoch mit unterschliedlichen Prismenwinkeln, die eine zusätzliche Fokussierung des Laserlichts bewirken.

Fig. 4 zeigt eine weitere Ausführungsform im Querschnitt, bei der die Größen der Prismen variabel sind.

Fig. 5 zeigt den Querschnitt einer Ausführung mit abgerundeten Kanten und teilweise gekrümmten Einkoppelkanten. Dieses Beispiel zeigt, dass vielfältige Designmöglichkeiten vorhanden sind, die bei geschickter Gestaltung weiterhin nur geringe Verluste bei der Einkopplung des Laserlichts zur Folge haben.

Fig. 6 zeigt die Seitenansicht einer Ausführung in der Art der in Fig. 4 gezeigten Ausgestaltung, die seitlich scharf begrenzt ist.

Fig. 7 zeigt eine Seitenansicht ähnlich der in Fig. 6, jedoch mit sanft auslaufenden Enden der Lichteinkoppelstruktur 07 zumindest als Teil der Einkoppel- und/oder Umlenkmittel 04, um eine angenehmere optische Anmutung zu erzeugen.

Fig. 8 zeigt eine Seitenansicht einer Ausführung, bei der viele Einzelprismen als Muster angeordnet sind. Durch die verbleibenden senkrechten Wandflächen treten hier stärkere optische Verluste auf, die diese Anordnung eröffnet jedoch vielfältige Designmöglichkeiten. Die Einkoppeleffizienz lässt sich mit einem speziell angepassten Lichtleiter erheblich erhöhen.

Fig. 9 zeigt eine Lichteinkoppelstruktur 07 zumindest als Teil der Einkoppel- und/oder Umlenkmittel 04, bei der das Licht zunächst die Seitenwand des transparenten Fügepartners durchdringt, dann jedoch nicht ausgekoppelt wird, sondern an der Lichteinkoppelstruktur 07 totalreflektiert wird und im Innern des transparenten Fügepartners zur Oberfläche 02 geleitet wird, wo es schließlich im Auftreffbeziehungsweise Absorptionspunkt auf der in der Kontaktzone der Oberfläche 02 des Fügeteils 01 gegenüberliegenden Fügefläche 06 des intransparenten Fügepartners 05 absorbiert wird, um das Material zumindest des intransparenten Fügepartners 05 kurzzeitig aufzuschmelzen.

Das Fügeteil 01 kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der noch folgenden Beschreibung erwähnte Merkmale aufweisen.

Das Fügeteil 01 erlaubt die Durchführung eines Verfahrens zum Laserdurchstrahlschweißen zweier Fügepartner, einem für der Wellenlänge eines zum Schweißen verwendeten Laserlichts transparenten Fügepartner und um einem für dieses Licht intransparenten Fügepartner.

Die beiden Fügepartner werden miteinander verschweißt, indem in einer kurz als Schweißnaht bezeichneten Kontaktzone zwischen zwei gegenüberliegenden Schweißflächen, nämlich einer Fügefläche 06 des intransparenten Fügepartners 05 und einer dieser gegenüberliegenden Oberfläche 02 des durch das Fügeteil 01 gebildeten transparenten Fügepartners eine stoffschlüssige Verbindung ausgebildet wird, indem das ohne Einwirkung des Laserlichts ansonsten feste Material zumindest eines der Fügepartner in der Kontaktzone durch das Laserlicht zumindest kurzzeitig aufgeschmolzen wird und sich mit dem Material des verbleibenden Fügepartners vereint und durch anschließendes Abkühlen aushärtet.

Das Laserlicht wird dabei durch den transparenten Fügepartner hindurch auf die Fügefläche 06 des intransparenten Fügepartners 05 gerichtet.

Das Verfahren zeichnet sich dadurch aus, dass das Laserlicht unter einem Neigungswinkel zu einer kurz als Flächennormalen bezeichneten, in einem Absorptionspunkt normal auf der Fügefläche 06 des intransparenten Fügepartners 05 in der Kontaktzone aufstehenden Achse geneigt von dessen Einkopplung in den durch das Fügeteil 01 gebildeten transparenten Fügepartner bis zu dessen zumindest weitgehenden Absorption am Absorptionspunkt durch den intransparenten Fügepartner 05 innerhalb des transparenten Fügepartners propagiert.

Vorteilhaft kann das Laserlicht unter einem Neigungswinkel zumindest zur Flächennormalen der Fügefläche 06 des intransparenten Fügepartners 05 in der Kontaktzone geneigt unter Totalreflexion (TIR; Total Internal Reflexion) in dem transparenten Fügepartner propagieren.

Bevorzugt propagiert das Laserlicht unter einem Neigungswinkel sowohl zur Flächennormalen der Fügefläche 06 des intransparenten Fügepartners 05, als auch zur Flächennormalen der der Fügefläche 06 in der Kontaktzone gegenüberliegenden Oberfläche 02 des den transparenten Fügepartner bildenden Fügeteils 01 geneigt unter Totalreflexion (TIR; Total Internal Reflexion) in dem transparenten Fügepartner.

Der Ausdruck, wonach das Laserlicht im oder innerhalb des transparenten Fügepartners propagiert beschreibt hierbei die durch die auch als geometrische Optik bezeichnete, strahlenoptische Ausbreitung stattfindende Verteilung des Lichts im transparenten Fügepartner. Die geometrische Optik oder Strahlenoptik bedient sich des Strahlenmodells des Lichts. Sie behandelt auf einfache, rein geometrische Weise den Weg des Lichtes entlang von Linien. Zwar kommt einem auf eine Linie begrenzten Lichtstrahl keine physikalische Realität zu, dafür lässt sich mit Hilfe der Strahlenoptik die Funktion der optischen Abbildung mit ausreichender Genauigkeit beschreiben, wobei der Bildpunkt der optischen Abbildung im Fall des Laserdurchstrahlschweißens der auf der Fügefläche des intransparenten Fügepartners liegende Absorptionspunkt ist.

Das Laserlicht kann bereits unter einem Neigungswinkel zumindest zur Flächennormalen der Fügefläche des intransparenten Fügepartners in der Kontaktzone geneigt in den transparenten Fügepartner eingekoppelt werden.

Bevorzugt wird das Laserlicht unter einem Neigungswinkel sowohl zur Flächennormalen der Fügefläche 06 des intransparenten Fügepartners 05, als auch zur Flächennormalen der der Fügefläche 06 in der Kontaktzone gegenüberliegenden Oberfläche 02 des den transparenten Fügepartner bildenden Fügeteils 01 geneigt in den transparenten Fügepartner eingekoppelt.

Das Verfahren kann vorsehen, dass eine seitliche Einkopplung des Laserlichts in eine auf einer der Kontaktzone gegenüberliegenden, abgewandten Seite aufstehende Wand 03, beispielsweise eine Seitenwand, des transparenten Fügepartners erfolgt.

Eine seitliche Einkopplung in die auf der der Kontaktzone gegenüberliegenden, abgewandten Seite aufstehende Wand 03, beispielsweise eine Seitenwand, des transparenten Fügepartners ist beispielswiese über einen optisch angekoppelten Lichtleiter 08 denkbar, wobei sichergestellt werden muss, dass stets ein optischer Kontakt zwischen Lichtleiter 08 und transparentem Fügepartner hergestellt wird. Wird dieser Kontakt nicht vollständig hergestellt, so wird an den Stellen des Lichtleiters 08 ohne optischen Kontakt das Licht totalreflektiert und nicht in den transparenten Fügepartner eingekoppelt. Das Laserdurchstrahlschweißen, bei dem das Licht durch den transparenten Fügepartner hindurch propagierend auf die Fügefläche des intransparenten Fügepartners gerichtet wird ist dann nicht mehr möglich.

Besonders vorteilhaft sieht das Verfahren vor, dass die seitliche Einkopplung des Laserlichts via mindestens einer Laserlichteinkoppelstruktur 07 an der auf der der Kontaktzone gegenüberliegenden, abgewandten Seite aufstehenden Wand 03 des transparenten Fügepartners, beispielsweise einer Seitenwand des transparenten Fügepartners, erfolgt.

Besonders vorteilhaft sieht das Verfahren demnach wenigstens eine Laserlichteinkoppelstruktur 07 an einer auf der Kontaktzone aufstehenden Wand 03 des transparenten Fügepartners, beispielsweise einer Seitenwand des transparenten Fügepartners, vor.

Es ist ersichtlich, dass die Erfindung verwirklicht sein kann durch eine an einem aus einem für das Laserdurchstrahlschweißen verwendeten Laserlicht transparenten Werkstoff hergestellten ersten Fügepartner von zwei durch Laserdurchstrahlschweißen miteinander zu verbindenden Fügepartnern vorgesehene Einkoppelstruktur zur seitlichen Einkopplung des Laserlichts für das Laserdurchstrahlschweißen. Die Einkoppelstruktur verkürzt den Laufweg des Laserlichts im mit ihr versehenen Fügepartner bis zur Schweißnaht. Die Schweißnaht befindet sich zwischen zwei aneinander angrenzenden Flächen der beiden Fügepartner. Bei den aneinander angrenzenden Flächen handelt es sich um eine Fügefläche des intransparenten Fügepartners und um eine dieser gegenüberliegende Oberfläche des transparenten Fügepartners.

Der intransparente Fügepartner besteht bevorzugt aus einem das für das Laserdurchstrahlschweißen verwendete Laserlicht zumindest weitgehend absobierenden Werkstoff.

Die Erfindung kann durch oder in Zusammenhang mit einer Fahrzeugleuchte 01 verwirklicht sein, welche im Wesentlichen einen von einem Leuchtengehäuse und einer Lichtscheibe zumindest teilweise umschlossenen Leuchteninnenraum und mindestens ein darin beherbergtes Leuchtmittel mit zumindest einer zur Erfüllung wenigstens einer Lichtfunktion der Fahrzeugleuchte dienenden Lichtquelle, sowie gegebenenfalls zugehörige, beispielsweise zum Betrieb der einen oder mehreren Lichtquellen erforderliche Elektronikbauteile umfasst. In dem Leuchteninnenraum kann mindestens ein von außerhalb des Leuchteninnenraums durch eine oder mehrere von der Lichtscheibe verschlossene Lichtöffnungen hindurch gesehen hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuses selbst, beispielsweise vermittels einer zumindest teilweisen reflektierenden Beschichtung, gebildet sein.

Die Lichtscheibe ist durch eine transparente Abdeckung gebildet, welche den Leuchteninnenraum sowie die von diesem beherbergten Bauteile gegen Witterungseinflüsse schützt. Die Abdeckung ist hierbei wenigstens für einen Wellenlängenbereich elektromagnetischer Wellen transparent, der zumindest einen vom für das menschliche Auge sichtbaren Teil des Spektrums elektromagnetischer Wellen umfasst. Ein solcher Wellenlängenbereich wird nachfolgend als ein für das menschliche Auge sichtbarer Bereich bezeichnet.

Das Leuchtengehäuse weist zumindest eine Lichtöffnung für einen Lichtaustritt wenigstens einer Lichtquelle des mindestens einen Leuchtmittels aus dem Leuchteninnenraum auf. An der fertigen Fahrzeugleuchte ist die mindestens eine Lichtöffnung von der Lichtscheibe verschlossen. Wenigstens eine Wandung des Leuchtengehäuses umgibt die Lichtöffnung. Die Wandung weist eine der umgebenen Lichtöffnung zugewandte Innenoberfläche und eine der umgebenen Lichtöffnung abgewandte Außenoberfläche auf. Eine um die Lichtöffnung umlaufende Randfläche grenzt entlang eines Innenrands an die Innenoberfläche und entlang eines Außenrands an die Außenoberfläche an und verbindet zwischen Innenrand und Außenrand die Innenoberfläche und die Außenoberfläche. Der Innenrand spannt eine Fläche der Lichtöffnung auf. Die Kontur des um die Lichtöffnung umlaufenden Innenrands der Randfläche widerspiegelt den Flächenverlauf der Lichtöffnung.

Die Randfläche kann diesen Flächenverlauf vom Innenrand zum Außenrand hin fortsetzen.

Der Flächenverlauf kann eben oder zweidimensional gewölbt, wobei ein Schnitt in einer Richtung durch den Flächenverlauf eine Gerade bildet, oder dreidimensional gekrümmt verlaufen, wo sich kein Schnitt mit einem geraden Verlauf findet.

Die Lichtscheibe kann durch ein zuvor beschriebenes, beim Laserdurchstrahlschweißen den transparenten Fügepartner bildenden Fügeteil 01 gebildet sein, wohingegen das Leuchtengehäuse den intransparenten Fügepartner 05 bildet.

In der Kontaktzone stehen sich die durch die Randfläche gebildete Fügefläche 06 des intransparenten Fügepartners 05 als eine von zwei einander in der Kontaktzone gegenüberliegenden Schweißflächen und eine die Außenfläche und die Innenfläche einer an einer dem Leuchteninnenraum zugewandten Rückseite der Lichtscheibe aufstehenden Wand 03 miteinander verbindenden Oberfläche 02 als verbleibende Schweißfläche gegenüber.

Der das Leuchtengehäuse bildende intransparente Fügepartner 05 weist dabei mindestens eine Öffnung auf, die vermittels des mittels Laserdurchstrahlschweißens mit dem Leuchtengehäuse verbundenen oder zu verbindenden Fügeteil 01 verschlossen und/oder verschließbar ist.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Fügeteil
- 02: Oberfläche
- 03: Wand
- 04: Einkoppel- und/oder Umlenkmittel
- 05: intransparenter Fügepartner
- 06: Fügefläche
- 07: Lichteinkoppelstruktur
- 08: Lichtleiter

## Patentansprüche

1. Verfahren zum Laserdurchstrahlschweißen zweier Fügepartner (01, 05), einem für der Wellenlänge eines zum Schweißen verwendeten Laserlichts (L) transparenten Fügepartner (01) und um einem für dieses Licht intransparenten Fügepartner (05), wobei die beiden Fügepartner (01, 05) miteinander verschweißt werden, indem in einer Kontaktzone zwischen einer Fügefläche (06) des intransparenten Fügepartners (05) und einer dieser gegenüberliegenden Oberfläche (02) des transparenten Fügepartners (01) eine stoffschlüssige Verbindung ausgebildet wird, wobei das ohne Einwirkung des Laserlichts (L) ansonsten feste Material zumindest eines der Fügepartner (01, 05) in der Kontaktzone durch das Licht zumindest kurzzeitig aufgeschmolzen wird und sich mit dem Material des verbleibenden Fügepartners (05, 01) vereint und durch anschließendes Abkühlen aushärtet, wobei das Laserlicht (L) durch den transparenten Fügepartner (01) hindurch auf die Fügefläche (06) des intransparenten Fügepartners (05) gerichtet wird, **dadurch gekennzeichnet, dass** das Laserlicht (L) innerhalb des transparenten Fügepartners (01) unter einem Neigungswinkel zu einer in einem Absorptionspunkt normal auf der Fügefläche (06) des intransparenten Fügepartners (05) in der Kontaktzone aufstehenden Achse geneigt von dessen Einkopplung in den transparenten Fügepartner (01) bis zu dessen zumindest weitgehenden Absorption durch den intransparenten Fügepartner (05) am Absorptionspunkt propagiert.

2. Verfahren nach Anspruch 1, wobei das Laserlicht unter Totalreflexion (TIR; Total Internal Reflexion) in dem transparenten Fügepartner (01) propagiert.

3. Verfahren nach Anspruch 1 oder 2, wobei das Laserlicht (L) unter einem Neigungswinkel zur Flächennormalen der Fügefläche (06) des intransparenten Fügepartners (05) geneigt in den transparenten Fügepartner (01) eingekoppelt wird.

4. Verfahren nach Anspruch 1, 2 oder 3, wobei eine seitliche Einkopplung des Laserlichts (L) in eine auf einer der Kontaktzone gegenüberliegenden, abgewandten Seite aufstehende Wand (03) des transparenten Fügepartners (01) erfolgt.

5. Verfahren nach Anspruch 4, wobei die seitliche Einkopplung des Laserlichts (L) via einer Laserlichteinkoppelstruktur (07) an der auf der der Kontaktzone gegenüberliegenden, abgewandten Seite aufstehenden Wand (03) des transparenten Fügepartners (01) erfolgt.

6. Fügeteil (01) aus einem für Laserlicht (L) transparenten Material als einer von zwei Fügepartnern zum Laserdurchstrahlschweißen, umfassend:
- eine als eine von zwei beim Laserdurchstrahlschweißen einander gegenüberliegende Schweißflächen einer Kontaktzone vorgesehene Oberfläche (02), und
- eine auf einer der Oberfläche (02) gegenüberliegenden, abgewandten Seite des Fügeteils (01) aufstehende Wand (03),
wobei das Fügeteil (01) Einkoppel- und/oder Umlenkmittel (04) zur seitlichen Einkopplung des Laserlichts (L) in die Wand (03) und/oder zur Umlenkung des Laserlichts (L) zu der Oberfläche (02) aufweist.

7. Fügeteil nach Anspruch 6, wobei es sich dabei um eine Lichtscheibe einer Fahrzeugleuchte handelt.

8. Fügeteil nach Anspruch 6 oder 7, wobei es sich bei der Wand (03) um eine auf der in fertiggestelltem Zustand einer Fahrzeugleuchte einem Leuchteninnenraum zugewandten Rückseite der Lichtscheibe aufstehende Seitenwandpartie handelt.

9. Fügeteil nach einem der Ansprüche 6, 7 oder 8, wobei die Wand (03) mit mindestens einer Lichteinkoppelstruktur (07) als zumindest einen Teil der Einkoppel- und/oder Umlenkmittel (04) versehen ist.

10. Fügeteil nach einem der Ansprüche 6 bis 9, wobei die Wand (03) unter einem Winkel von 60° bis 120° auf der der Oberfläche (02) gegenüberliegenden, abgewandten Seite des Fügeteils (01) aufsteht.
